# EUROPÄISCHE PATENTANMELDUNG

(11) **EP 2 921 255 A2**
(43) Veröffentlichungstag der Anmeldung: **23.09.2015**
(21) Anmeldenummer: 15000544.5
(22) Anmeldetag: 25.02.2015
(51) Int. Cl.: B23Q 16/10, B23Q 16/02, B23Q 1/00

(54) **DREH-WERKSTÜCKTRÄGER MIT FIXIERBARER DREHPOSITION**

(30) Priorität: 21.03.2014 DE 102014004198
(71) Anmelder: Wagner Werkzeugsysteme Müller GmbH, 72124 Pliezhausen (DE)
(72) Erfinder: Conzelmann, Timo, 72461 Albstadt (DE); Sulz, Frank, 72768 Reutlingen (DE); Schneider, Klaus, 72124 Pliezhausen (DE)

(57) **Zusammenfassung**

Um bei CNC-Bearbeitungszentren komplexe Werkstücke bearbeiten zu können, kann es erforderlich sein die Grundausstattung des CNC-Bearbeitungszentrums durch Hinzufügen weiterer Bearbeitungsachsen dazu zu befähigen. Dazu dienen anbaubare Gerätebaugruppen, sogen. Dreh-Werkstückträger oder auch Teilgeräte oder Rundtische, um genaue Winkelstellungen für einzelne Bearbeitungsschritte am Werkstück CNC-gesteuert einstellen zu können. Für den Einbau im Bearbeitungsbereich des CNC-Bearbeitungszentrums sind neben dem Grund-Montageaufwand zur sicheren Befestigung des Teilgerätes auch die steuerungstechnische Verknüpfung und Versorgung des Teilgerätes mit Fremdenergie notwendig - zumeist elektrische, hydraulischen oder auch pneumatische Energieversorgung - mit dem nicht unerheblichen Montageaufwand dazu. Je nach Ausstattung des CNC-Bearbeitungszentrums werden zusätzliche Hilfsaggregate zur Versorgung mit hydraulischer Energie notwendig.

Es ist Aufgabe der Erfindung den Montage- und Betriebsaufwand für den Einsatz von Dreh-Werkstückträgern in CNC-Bearbeitungszentren dadurch zu verbessern, dass der Fixiervorgang des Werkstückträgers ohne extern zugeführte hydraulische oder pneumatische Energie ermöglicht ist.

Diese Aufgabe wird erfindungsgemäß dadurch gelöst, dass zum Betreiben aller, voneinander unabhängigen, Verstell- wie Klemmfunktionen innerhalb des Dreh-Werkstückträgers nur elektrische Energie von außen zugeführt wird und somit eine autarke, nur elektrisch betriebene Funktionseinheit darstellt.

## Beschreibung

Die vorliegende Erfindung betrifft einen Dreh-Werkstückträger mit fixierbarer Drehposition für den vorzugsweisen Gebrauch bei CNC-Werkzeugmaschinen gemäß dem Oberbegriff des Patentanspruchs 1.

### Stand der Technik

Bei der spanabhebenden Bearbeitung von komplexen Werkstücken kann es erforderlich sein dem CNC-Bearbeitungszentrum eine weitere Bearbeitungsachse mit Hilfe eines zusätzlich darauf montierbaren Dreh-Werkstückträgers hinzuzufügen, je nach Grundausstattung der Werkzeugmaschine kann damit eine 4. und/oder 5. Bearbeitungsachse installiert werden. Dreh-Werkstückträger sind unter den Bezeichnungen Teilapparat, Teilgerät oder auch Rundtisch im Markt eingeführt, zumeist mit dem Zusatz NC als Hinweis auf die programmierbare Ansteuerbarkeit bzw. der Möglichkeit der Verknüpfung mit der überlagerten CNC-Steuerung des Bearbeitungszentrums, um fertigungsabhängig erforderliche Winkellagen des zu bearbeitenden Werkstücks entsprechend dem Fertigungsprogramm automatisch einzustellen. Gemeinsame Merkmale dieser speziellen Vorrichtungen bestehen darin, dass ein Werkstückträger, in der Form eines Tisches oder Scheibe o.ä., drehbar in hochgenauen Wälzlagern in einer sogen. Teilspindel gelagert ist und die den Werkstückträger tragende Teilspindel mittels elektromotorischem Antrieb relativ zum statischen Unterbau in beliebige Winkellagen verstellt werden und damit das auf der Werkstückaufnahme aufgespannte Werkstück in die erforderliche Bearbeitungsposition gebracht werden kann. Der Unterbau wiederum ist mit dem Bearbeitungszentrum an geeigneter Stelle kraftschlüssig verbunden. Während des Bearbeitungsprozesses, zumeist eine Fräsbearbeitung, wirken hohe Bearbeitungskräfte die über die Lagerung und den Unterbau auf das Bearbeitungszentrum abgeleitet werden müssen. Bei den geforderten hohen Fertigungsgenauigkeiten muss sichergestellt sein, dass die eingestellte Winkellage des Werkstückes währenddessen unverrückbar eingehalten wird. Zumeist wird die gesicherte Bearbeitungsposition dadurch erreicht, dass die Teilspindel bzw. der Werkstückträger während des Zerspanungsvorgangs hydraulisch geklemmt ist. In der DE 197 40 042 wird z.B. die Fixierung des Drehtisches gegenüber dem Gehäuse-Unterbau dadurch erreicht, dass ein hydraulisch aufweitbarer Klemmring durch Druckbeaufschlagung so aufgeweitet wird, dass er den Drehtisch bis zu einer Arretierung gegenüber dem Gehäuse verspannt. Bei dem in der DE 202 02 998 beschriebenen Werkstücktisch zur Fräs-und Drehbearbeitung ist eine hydraulisch betätigbare Klemmeinrichtung zum Fixieren des Rundtisches im Fräsbetrieb vorgesehen die aus mehreren über den Umfang gleichmäßig verteilten Kolben-Zylinder-Einheiten und ein mit dem Rundtisch verbundenes ringförmiges Klemmelement ausgeführt ist. Eine direkte Klemmung der Teilspindel hat die Fa. HOFMANN Mess- und Teiltechnik bei ihrer RWNC-Baureihe von Präzisionsteilgeräten realisiert: Eine mit hydraulischem Druck beaufschlagbare Klemmhülse umschließt die Teilspindel, drucklos mit geringem Spiel und klemmt diese bei einem Hydraulik-Klemmdruck bis max. 200 bar. Allen geschilderten Einrichtungen zur Winkelpositionierung von aufgespannten Werkstücken ist gemeinsam, dass der erforderliche hydraulische Druck zur Klemmung bzw. Fixierung der Winkelposition des drehbaren Werkstückträgers von außen zugeführt werden muss, entweder vom Hydrauliksystem des Bearbeitungszentrums oder wenn bei diesem die erforderliche Druckhöhe nicht erzeugbar ist von einem zusätzlichen, separaten Hydraulikaggregat. Dies ist mit zusätzlichem Aufwand, vor aller für die hydraulischen und elektrischen Leitungsverbindungen einschließlich deren Kupplungselemente und damit auch der Ausweitung möglicher Fehlerquellen bei der Neuinstallation oder im Laufe der Betriebszeit verbunden. Weiterhin negativ wirkt sich die erhöhte Kompressibilität des Hydrauliksystems durch längere Hydraulikleitungen dahingehend aus, dass die Reaktionszeiten der hydraulischen Klemmung verlängert werden. Eine teilweise Verbesserung dieser Situation wird bei der RWNC-Baureihe durch die Integration eines pneumatisch angetriebenen Druckübersetzers zur Erzeugung des notwendigen hydraulischen Hochdrucks erreicht, hierzu muss aber das Bearbeitungszentrum mit entsprechenden pneumatischen Einrichtungen, bzw. einer für weitere Abnahmestellen nutzbaren Druckluft-Druckquelle versehen sein oder die pneumatische Energie muss noch weiter entfernt von einem externen Kompressor dem RWNC-Teilgerät zugeführt werden, was ebenfalls zusätzlichen Installationsaufwand erfordert und zu Fehlerquellen führen kann. Ein zusätzlicher Nachteil der pneumatischen Ansteuerung besteht darin, dass die Reaktionszeiten durch die unterschiedlichen Leitungslängen der Pneumatikleitungen noch stärker negativ beeinflusst werden als bei Hydraulikleitungen und vom jeweiligen Maschinenaufbau abhängig sind. Die Zeiten für die Klemmung oder das Lösen der Klemmung der fixierten Positionen sind aber sogenannte Nebenzeiten und gehören zu den unproduktiven Zeitanteilen der Bearbeitungszeit-Summe pro Werkstück.

Energetisch ungünstig ist der mehrfache Wandel der Energieform von elektrisch auf pneumatisch und dann auf hydraulisch von zumeist für den reinen Spannvorgang überdimensionierten externen Druckerzeugereinheiten pneumatisch wie hydraulisch.

Der Erfindung liegt deshalb die Aufgabe zugrunde, Dreh-Werkstückträger der beschriebenen Art so weiterzubilden, dass der Fixiervorgang des Werkstückträgers ohne extern zugeführte hydraulische oder pneumatische Energie ermöglicht ist, unter Vermeidung der aufgezeigten Nachteile bisheriger Lösungen.

Diese Aufgabe wird durch einen Dreh-Werkstückträger mit den Merkmalen des Patentanspruchs 1 gelöst. Vorteilhafte Ausgestaltungen der Erfindung sind Gegenstand der anliegenden Unteransprüche.

Der Kern der Erfindung und damit der wesentliche Unterschied zum Stand der Technik besteht darin, dass zum Betreiben aller, voneinander unabhängigen, Verstell- wie Klemmfunktionen innerhalb des Dreh-Werkstückträgers nur elektrische Energie von außen zugeführt wird und somit eine autarke, nur elektrisch betriebene Funktionseinheit darstellt. Da zur Verstellung der Dreh-Werkstückträger grundsätzlich elektromechanische Antriebe vorgesehen sind, wie auch überwiegend für alle sonstigen Werkzeugantriebe innerhalb eines Bearbeitungszentrums, ist elektrische Energie in abgestuften Spannungen und Spannungsformen immer vorhanden und mit relativ geringstem Aufwand innerhalb der Fertigungseinrichtung nutzbar. Dies wird bei der vorgeschlagenen Erfindung konsequent umgesetzt, so dass die Inbetriebnahme und Nutzung beim Einsatz der erfindungsgemäßen Dreh-Werkstückträger wesentlich vereinfacht sind.

In einer vorteilhaften Ausgestaltung der Erfindung ist innerhalb des Dreh-Werkstückträgers eine miniaturisierte Einrichtung zur elektrohydraulischen Druckerzeugung in unmittelbarer Wirkverbindung zur hydraulischen Klemmeinrichtung integriert. Durch die erfindungsgemäß unmittelbar räumliche Nähe des Druckerzeugers zur Klemmanordnung erfordert der zur Fixierung der Drehposition der Teilspindel erforderliche Klemmdruckaufbau lediglich die Kompression eines kleinen Fluidvolumens, hauptsächlich innerhalb des Ringspaltes zwischen Klemmhülse und dem Lagergehäuse der Teilspindel, sowie der Zuführung des Differenzvolumens zur Überwindung des geringen Spiels zwischen Klemmhülsenbohrung und Teilspindel-Außendurchmesser d.h. die Fördermenge pro Zeiteinheit und somit der Leistungsbedarf des elektrohydraulischen Druckerzeugers ist äußerst gering.

In weiterer vorteilhafter Ausgestaltung der Erfindung besteht die elektrohydraulische Druckerzeugung aus einer Rotationspumpe, angetrieben von einem E-Motor und beaufschlagt die Klemmeinrichtung über ein, den Klemmdruck haltendes, dichtes Rückschlagventil und besteht weiter aus einem, den Pumpendruck begrenzendes Druckbegrenzungsventil sowie einem, vorzugsweise bestromt den Klemmdruck haltendes bzw. stromlos den Klemmdruck entlastendes, 2/2-Magnetventil und den Klemmdruck kontinuierlich messende Druckmessmittel. Dieser Schaltungsvorschlag beinhaltet den geringsten Aufwand an hydraulischen Bauteilen zur internen Ansteuerung der Klemmeinrichtung und somit auch geringstes Bauvolumen, wobei das Druckbegrenzungsventil, je nach Ausführung der E-Motoransteuerung, auch evtl. entfallen kann. Je nach betrieblicher Erfordernis kann das 2/2-Magnetventil auch mit alternativem Symbol stromlos geschlossen, bestromt geöffnet - ausgeführt sein.

In einer weiteren Ausgestaltung ist vorgesehen, dass die elektrohydraulische Druckerzeugung zuerst über ein den Speicherdruck haltendes, dichtes Rückschlagventil in einen Hydraulikspeicher fördert und über ein erstes 2/2-Magnetventil (stromlos geschlossen), bestromt die Klemmeinrichtung aus dem Speicherdruck mit Klemmdruck beaufschlagt, sowie über ein zweites 2/2-Magnetventil - vorzugsweise, bestromt den Klemmdruck haltend, stromlos den Klemmdruck entlastend - sowie über ein erstes Druckmessmittel der Speicherdruck kontinuierlich erfasst wird und über ein zweites Druckmessmittel der Klemmdruck kontinuierlich erfasst wird. Mit dieser erweiterten Schaltungsanordnung sind die kürzest möglichen Reaktionszeiten beim Klemmen der Teilspindel zu realisieren, wobei an die dynamischen Druckaufbau-Eigenschaften der elektrohydraulischen Druckerzeugung geringere Anforderungen zu stellen sind.

In einer alternativen Ausgestaltung der Erfindung wird vorgeschlagen, dass die elektrohydraulische Druckerzeugung mittels einer Elektromagnet-Pumpe mit Frequenz- und Stromansteuerung ausgeführt ist. Bei dieser Art der Druckerzeugung ist mittels der Frequenz- und Stromansteuerung der dynamische Druckaufbau besonders gut regelbar wodurch u.a. das Druckbegrenzungsventil entbehrlich sein kann.

Bei einer besonders vorteilhaften und noch konsequenteren Ausführung des Erfindungsgedankens besteht die elektrohydraulische Druckerzeugung aus einer vom E-Motor der Getriebeschnecke mit-angetriebenen Rotationspumpe.

Bei diesem Ausführungsvorschlag ist vorteilhaft, dass der bereits vorhandene E-Motor des Teilgerätes auch die Druckfluidversorgung mit übernimmt wodurch innerhalb des Teilgerätes kein zweiter E-Motor angeordnet werden muss was zur weiteren Bauraum-Minimierung der Klemmdruckerzeugung beiträgt.

Zur Realisierung des Erfindungsgedankens wird vorgeschlagen, dass, ausgehend vom Fluid-Druckausgang der mit-angetriebenen Rotationspumpe, die Klemmdruckerzeugung folgende hydraulische Bauteile umfasst: In einer ersten Abzweigung vom Fluid-Druckkanal ein Druckbegrenzungsventil zur max. Druckabsicherung mit Abfluss zum Fluidreservoir. In einer zweiten Abzweigung vom Fluid-Druckkanal ein erstes 2/2-Magnetventil - stromlos geöffnet, bestromt geschlossen - mit Abfluss zum Fluidreservoir. Im weiteren Verlauf des Fluid-Druckkanals ein in Strömungsrichtung öffnendes Rückschlagventil. In einer dritten Abzweigung nach der Sperrseite des Rückschlagventils ein Hydraulikspeicher zur zeitweisen Aufnahme eines Fluidvolumens unter Druck des von der Rotationspumpe geförderten Fluids, sowie eine hydraulische, parallele Verbindung zu einem ersten Druckmessmittel. Im weiteren Verlauf ist der Fluid-Druckkana gesperrt durch ein zweites 2/2-Magnetventil - stromlos geschlossen, bestromt geöffnet. Ausgangsseitig des zweiten 2/2-Magnetventils verbindet der Fluid-Druckkanal einerseits den mit dem Klemmdruck zu beaufschlagenden Druckraum der Klemmeinrichtung und andererseits ein drittes 2/2-Magnetventil-vorzugsweise stromlos geöffnet, bestromt geschlossen. Ein zweites Druckmessmittel, hydraulisch verbunden mit dem Druckraum der Klemmeinrichtung. Das dritte 2/2-Magnetventil ist Ausgangsseitig mit dem Fluidreservoir verbunden. Dieser Schaltungsaufbau ermöglicht es die vom Bearbeitungsablauf abhängige Klemmsequenz unabhängig von der ebenfalls vom Bearbeitungsablauf abhängigen E-Motorbetriebszeit, nur über die Druckfluidentnahme aus dem Speicher zu betreiben, bei kürzesten Klemm- bzw. Entklemmzeiten. Möglich ist dieser Erfindungsvorschlag durch die hohe Übersetzung des Schneckengetriebes, da ein Mehrfaches an Motor- und somit Rotationspumpenumdrehungen gegenüber den Umdrehungen der Teilspindel zu einem Überschuss an Druck-Fluidvorrat im Hydraulikspeicher führt.

Bei einer weiteren vorteilhaften Ausgestaltung der Erfindung ist das Fluidreservoir auf einen geringen, jedoch über dem Umgebungsdruck liegenden, Niederdruck vorgespannt. Dies ist mit relativ geringem Bauaufwand möglich da nur ein geringes Differenzvolumen zwischen Niederdruck- und Hochdruckseite gefördert werden muss. Dadurch können die saugseitigen Voraussetzungen der hochdynamisch auszulegenden Druckerzeuger wesentlich verbessert werden, was auch zu einer weiteren Bauraumminimierung bei erhöhter Betriebssicherheit beitragen kann.

In einem weiteren, alternativen Vorschlag zur Realisierung der Erfindung wird die Klemmung der Teilspindel dadurch erzeugt, dass der Durchmesser der Klemmhülse der Klemmeinrichtung über einen elektromechanischen Aktor, bis zur Erzeugung einer Klemmkraft auf die Teilspindel, verkleinert wird, wobei vorzugsweise ein Piezoaktor vorgesehen ist. Dieser Erfindungsvorschlag würde auch innerhalb des Werkstückträgers die Verwendung hydraulischer Technologie zur Erzeugung einer hohen Klemmkraft entbehrlich machen, was insgesamt zu einem noch einfacheren und wartungsärmeren Dreh-Werkstückträger führt.

Mit dieser Erfindung sind die Installation und der Betrieb von Dreh-Werkstückträgern an CNC-Bearbeitungszentren wesentlich vereinfacht, wodurch auch die Wirtschaftlichkeit und die Betriebssicherheit bei Serien-Werkstückbearbeitungen noch weiter verbessert sind. Allen Erfindungsvorschlägen gemeinsam ist, dass durch die nur auf die Klemmkraft gezielt ausgerichtete und miniaturisierte Ausführung der nur dafür dimensionierten Bauteile gegenüber dem Stand der Technik, mit externer Erzeugung bzw. Zufuhr von Druckmittel, ein wesentlich geringerer Energieeinsatz erforderlich wird.

Weitere Vorteile und Ausführungen der Erfindung ergeben sich aus der Beschreibung und den überwiegend schematisierten Zeichnungen. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung die im vorliegenden Fall das Prinzip der Fixierung der Teilspindel durch Klemmung am Außendurchmesser der Teilspindel zugrunde legt. Alternative Klemmprinzipien durch axiale Klemmung, z.B. einer kraft- oder formschlüssig verbundenen 'Bremsscheibe' sind entsprechend dem Erfindungsgedanken in gleicher Weise realisierbar.

Es zeigen:
**Fig. 1** Teilgerät entsprechend dem Stand der Technik in konventioneller perspektivischer, teiltransparenter und auf die wesentlichen Bauelemente reduzierten Darstellung.
**Fig. 1a** Stand der Technik, wie Fig. 1, jedoch in einer auf das Funktionswesentliche abstrahiert skizzierten Darstellung als grundlegender Zeichnungsaufbau für die nachfolgend zu beschreibenden Ausführungsbeispiele der erfindungsgemäßen Lösungen.
**Fig. 2** Teilgerät mit integrierter, miniaturisierter elektrohydraulischer Druckerzeugung, vom Hauptantrieb unabhängig.
**Fig**. **2a** Hydraulischer Schaltungsvorschlag mit elektromotorisch angetriebener Rotationspumpe.
**Fig. 2b** Hydraulischer Schaltungsvorschlag mit elektromotorisch angetriebener Rotationspumpe und Hydraulikspeicher.
**Fig. 2c** Hydraulischer Schaltungsvorschlag mit Elektromagnet-Pumpe.
**Fig. 3** Teilgerät mit integrierter, miniaturisierter Druckerzeugung, vom Getriebe-E-Motor mit-angetriebener Rotationspumpe.
**Fig. 3a** Hydraulikschaltplan der Miniaturhydraulik zu Fig. 3
**Fig. 4** Fluidreservoir mit Druckvorspannung.
**Fig. 5** Teilgerät mit elektromechanischer Klemmung.

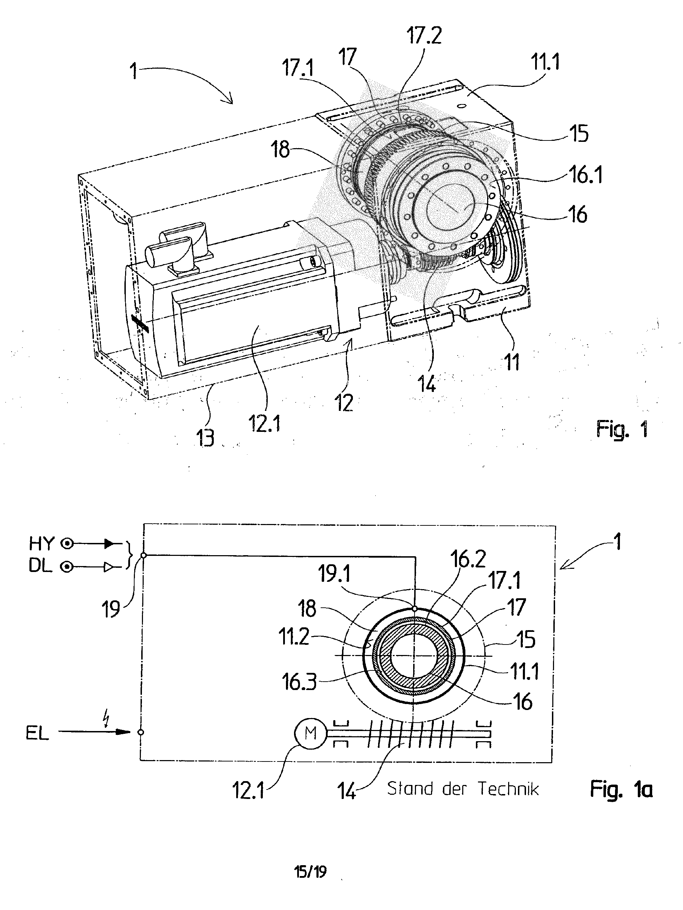

Ein Teilgerät **1,** z.B. nach der Bauart HOFMANN, die Baureihe RWNC, wie in **Fig. 1** konventionell und in **Fig. 1a** abstrahiert gezeigt, jedoch mit denselben Bezugszeichen für wirkungsgleiche Positionen, besteht aus einem Grundgerät **11** mit dem E-Motoranbau **12** und der Motorabdeckung **13**, wodurch das Teilgerät **1** insgesamt eine geschlossene Baueinheit darstellt. Wesentliche Funktionsteile sind im Grundgerät **11** angeordnet und bestehen aus der vom E-Motor **12.1** angetriebenen Schnecke **14** (Schneckenwellenlager symbolisch dargestellt) die in das Schneckenrad **15** eingreift. Das Schneckenrad **15** ist mit der Teilspindel **16** fest verschraubt. Die Teilspindel **16** ist stirnseitig **16.1** zur präzisen, kraftschlüssigen Aufnahme eines Werkstückträgers, z.B. Drehtisch oder Planscheibe (nicht dargestellt), vorbereitet. Parallel zum Schneckenrad **15** ist die Klemmhülse **17** angeordnet die die Teilspindel **16** an ihrem Außendurchmesser **16.2** mit geringem Spiel **16.3** umfasst (symbolisch als sichtbarer Ringspalt dargestellt) und ist wiederum im Gehäuse **11.1** des Grundgerätes **11** gelagert und mit dem Gehäuse **11.1** fest verschraubt. Zwischen der Aufnahmebohrung **11.2** im Gehäuse **11.1** und der Klemmhülse **17** ist ein Ringkanal **17.1** ausgebildet der gegenüber der Aufnahmebohrung **11.2** durch seitliche Hydraulikdichtungen **17.2** in der Klemmhülse **17** einen mit Hydraulikdruck beaufschlagbaren, hydraulisch dichten Druckraum **18** darstellt. Über den Druckanschluss **19** kann der Druckraum **18** von einer externen Druckquelle **HY** angesteuert werden, mit **19.1** ist der direkte Druck-Fluideintritt in den Druckraum **18** bezeichnet. Durch hydraulischen Druckaufbau im Druckraum **18** wird die Klemmhülse **17** in ihrem Durchmesser verkleinert und gegen den Außendurchmesser **16.2** der Teilspindel **16** geperesst wodurch eine schädliche Winkelveränderung an der Teilspindel **16,** verursacht durch äußere Bearbeitungskräfte am aufgespannten Werkstück, verhindert wind. Bei Erreichen des definierten Klemmdrucks ist ein ausreichendes Halternoment gewährleistet. Die Wirkungskombination aus Klemmhülse **17** und dem ansteuerbaren Druckraum **18** kann als Klemmeinrichtung bezeichnet werden. Bei einem zusätzlich angebauten, innerhalb der Motorabdeckung **13** angeordnetem, pneumatischhydraulischem Druckübersetzer (nicht dargestellt) wird eine externe, Druckluftquelle DL zur hydraulischen Klemmdruck-Ansteuerung genutzt, wobei der hydraulische Druckausgang des Druckübersetzers an den Druck-Fluideintritt **19.1** angeschlossen ist. Mit EL ist die Versorgung mit elektrischer Energie bezeichnet, in dem gezeigten Aufbau, nach dem Stand der Technik, zum Antreiben des E-Motors **12.1** zur Einstellung der geforderten Winkelstellungen der Teilspindel **16.** Zum Betreiben eines Teilgerätes **1** nach dem Stand der Technik sind also mindestens zwei unterschiedliche, von extern zuzuführen de, Energiearten notwendig mit den daraus folgenden Nachteilen, wie bereits dargelegt.

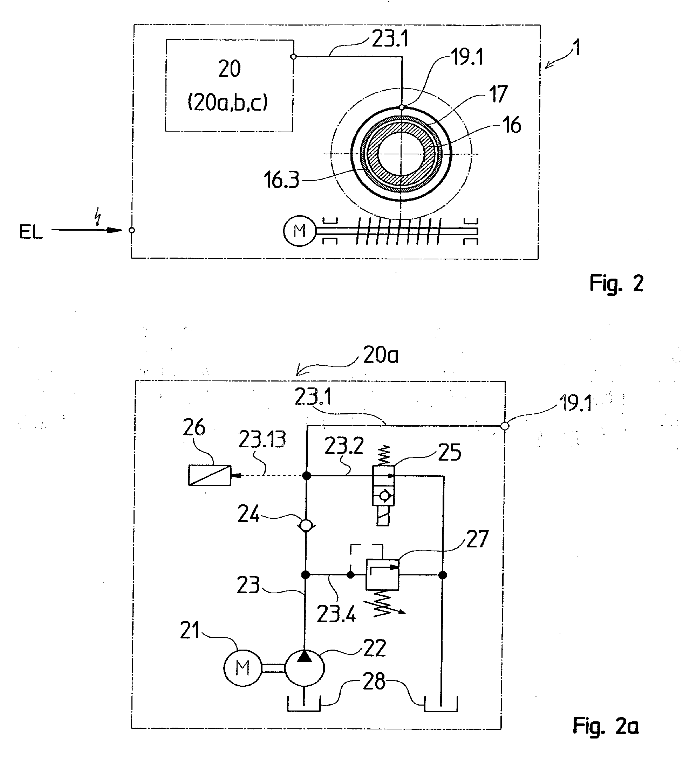

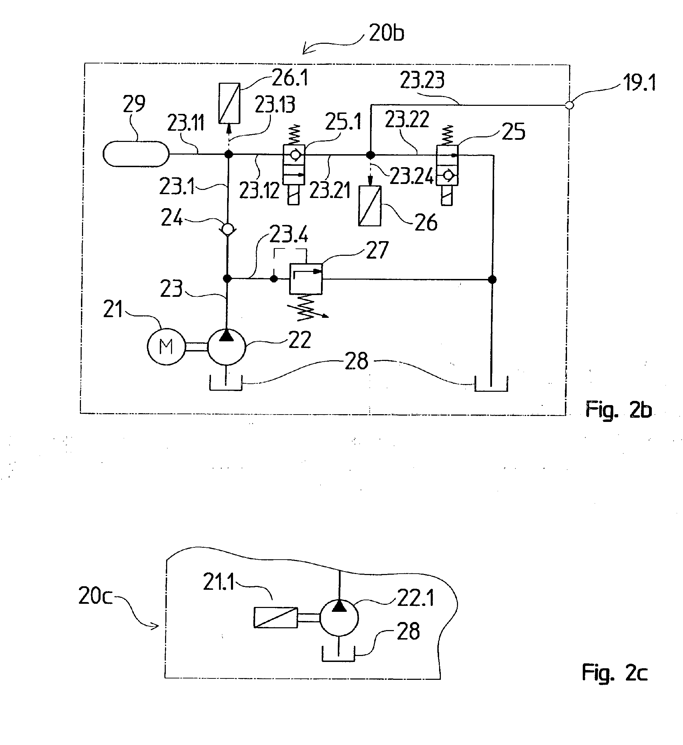

Die in den **Fig. 2, Fig. 2a****,** **Fig. 2b** und Ableitungen davon vorgeschlagenen, erfindungsgemäßen Lösungsvarianten bedürfen für alle Betriebsfunktionen nur der Zufuhr von elektrischer Energie **EL,** dazu ist innerhalb der Motorabdeckung **13** eine miniaturisierte, elektrohydraulische Funktionseinheit **20** in das Teilgerät **1** integriert. Durch die Integration und unmittelbare Anordnung der Klemmdruckerzeugung innerhalb des Teilgerätes **1** ist nur ein geringes Kompressionsvolumen von wenigen mm³ erforderlich, um die Klemmhülse **17** an die Teilspindel **16** anzupressen da das reale Spiel **16.3** im elastisch verformbaren Bereich der Klemmhülse **17** liegt, wodurch sich der erfindungswesentliche Einsatz von kleinsten Hydraulikelementen lediglich zur Klemmdruckerzeugung besonders vorteilhaft auszeichnet. Diese miniaturisierten Hydraulikbauteile, wie Ventile, Pumpen, Speicher usw. sind auch unter den Fachgebiets-Begriffen Minihydraulik, Miniaturhydraulik oder Mikrohydraulik bekannt und finden in den folgenden Beschreibungen Anwendung.

Ein erster Ausführungsvorschlag für die Ausbildung der elektrohydraulischen Funktionseinheit **20** zeigt in der **Fig. 2a** ein hydraulischer Schaltplan **20a** der Funktionseinheit **20** mit der Verschaltung der dafür vorgesehenen Mikrohydraulik-Funktionselemente. Ein E-Kleinstmotor **21** treibt eine Mikro-Rotationspumpe **22** an die in eine Hauptdruckleitung **23** fördert. Vorzugsweise ist der E-Kleinstmotor **21** ein Gleichstrommotor mit einem geringen Leistungsniveau da damit über eine geeignete elektronische Ansteuerung (nicht dargestellt) bedarfsgerechte Druckaufbauprofile der Mikro-Pumpe **22** erzeugt werden können. Ob der E-Kleinstmotor **21** mit oder ohne Kleinstgetriebe ausgeführt wird, ist lediglich abhängig von einer Auslegungsoptimierung bezüglich Bauraumvolumen und gewünschter Dynamik beim Klemmdruckaufbau. Ein Rückschlagventil **24** in der Hauptdruckleitung **23** sperrt den erzeugten Klemmdruck gegenüber der Pumpe **22** im weiteren Leitungsverlauf **23.1** der Hauptdruckleitung die, direkt über die hydraulische Schnittstelle **19.1,** unmittelbar in den Druckraum **18** führt. An eine Leitungsabzweigung **23.2** zur Hauptdruckleitung **23.1** ist ein 2/2-Magnetventil **25** (stromlos geöffnet) angeschlossen, das im stromlosen Zustand den Klemmdruck im Druckraum **18** abbaut und dadurch die hydraulische Klemmung bzw. Fixierung der Teilspindel **16** löst, bzw. im bestromten, geschalteten Schaltungszustand den Klemmdruck aufrecht erhält und somit die Klemmung bzw. Fixierung der Teilspindel **16.** Mittels eines Druckmessmittels **26,** hydraulisch angeschlossen über die Messleitung **23.13,** kann der Klemmdruck kontinuierlich überwacht werden. Eine Maximaldruckabsicherung ist durch ein Druckbegrenzungsventil **27,** hydraulisch angeschlossen über die Zweigleitung **23.4** zwischen Pumpe **22** und Rückschlagventil **24,** vorgesehen. Ein Fluidreservoir **28,** ebenfalls innerhalb der Funktionseinheit **20** angeordnet, ist üblicherweise mit der Saugseite der Pumpe **22** bzw. den Rücklaufseiten der Ventile **25**, sowie **27** in hydraulischer Wirkverbindung.

In **Fig. 2b** wird ein alternativer Schaltplan **20b** vorgeschlagen, der bei prinzipiell gleicher Grundanordnung gegenüber dem Schaltplan **20a** lediglich um eine Speicherschaltung erweitert ist. Hierbei fördert die Mikro-Pumpe **22** über das Rückschlagventil **24** und die Hauptdruckleitung **23.1** und deren Abzweigung **23.11** direkt in den Hydraulikspeicher **29.** Eine weitere Abzweigung **23.12,** von der Hautdruckleitung **23.1,** führt zu einem 2/2-Magnetventil **25.1,** das im stromlosen Zustand geschlossen ist und den Hydraulikdruck im Speicher **29** in diesem Schaltzustand aufrecht erhält. Mittels eines Druckmessmittels **26.1** wird über die hydraulische Messleitung **23.13** der Speicherdruck im Hydraulikspeicher **29** kontinuierlich erfasst. Die Aufrechterhaltung eines für die nachfolgenden Betriebsfunktionen notwendigen Speicherdrucks erfolgt in bekannter Weise im Zusammenwirken vom Meßsignal von **26.1** mit der Einschaltzeit des Pumpen-E-Motors **21** mittels elektrisch-elektronischer Schaltung (nicht dargestellt). Der Klemmdruckaufbau im Druckraum **18** kann durch Bestromen des 2/2-Magnetventils **25.1** eingeleitet werden, wobei Druckfluid aus dem Speicher **29** über die dem 2/2-Magnetventil **25.1** nachgeschalteten Hydraulikleitungen **23.21** und **23.23,** sowie die hydraulische Schnittstelle **19.1** unmittelbar in den Druckraum **18** eingespeist wird und der Klemmdruckaufbau über ein kontinuierlich wirkendes Druckmessmittel **26,** in Abstimmung mit der Einschaltzeit des 2/2-Magnetventils **25.1,** gesteuert bzw. überwacht wird, gleichzeitig wird das 2/2-Magnetventil 25 bestromt und dadurch geschlossen, um den Klemmdruck aufrecht zu erhalten. Klemmdruckabbau wie bei der zuvor beschriebenen Lösung. Das Druckmessmittel **26** ist über die hydraulische Messleitung **23.24** an die den Klemmdruck führende Leitung **23.23** angeschlossen. Die Maximaldruckabsicherung mittels Druckbegrenzungsventil **27** entspricht dem allgemeinen Stand der Technik und ergibt sich aus der Schaltplandarstellung, eine weitere Beschreibung erübrigt sich.

Der in **Fig. 2c** gezeigte Schaltplanausschnitt **20c** bezieht sich nur auf die elektrohydraulische Druckerzeugereinheit. Anstelle der in den Vorgängerschaltplänen gezeigten elektromotorisch angetriebenen Rotationspumpe **22** wird hierbei eine Elektromagnet-Pumpe **22.1** vorgeschlagen. Mittels elektronischer Frequenzregelung des Antriebsmagneten **21.1** können unterschiedliche, bedarfsgerechte Druckaufbauprofile erzeugt werden. Systembedingt kann bei der Elektromagnet-Pumpe **22.1** auf eine separate Maximaldruckbegrenzung, wie in den Vorgängerschaltungen das Druckbegrenzungsventil **27,** verzichtet werden. Ansonsten entspricht der prinzipielle Schaltungsaufbau den in den Fig. 2b bzw. Fig. 2c gezeigten Anordnungen.

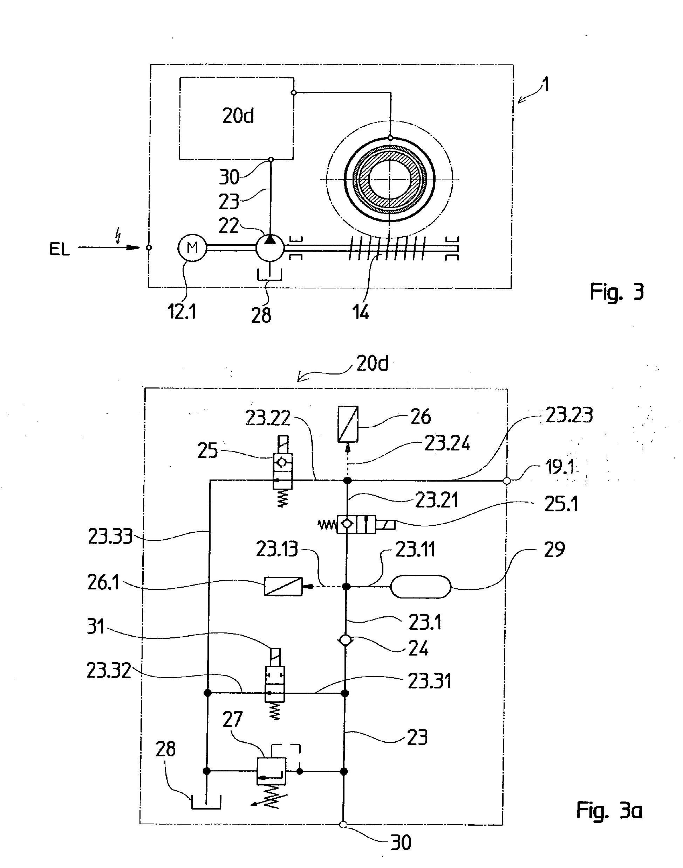

Bei dem erfindungsgemäßen Teilgerät **1** nach **Fig. 3** wird die Rotationspumpe **22** vom Elektro-Schneckengetriebemotor **12.1** mit angetrieben, womit ein el. Einmotorantrieb für einen Dreh-Werkstückträger mit integrierter hydraulisch fixierbarer Drehposition erstmalig realisiert ist. Die Rotationspumpe **22** kann dabei zwischen dem Motor **12.1** und der Schneckenwelle **14** (wie gezeigt) oder am Ende der Schneckenwelle **14** oder in der Form eines Nebenantriebs zur Schneckenwelle **14** angeordnet sein und fördert drehrichtungsunabhängig in die Hauptdruckleitung **23** die über die hydraulische Schnittstelle **30** mit der Hydraulikschaltung **20d** verbunden ist.

In **Fig. 3a** ist die Hydraulikschaltung **20d** offenbart. Der Grundaufbau entspricht der Schaltungsanordnung nach **20b.** Funktionsgleiche Bauteile werden mit den bisher verwendeten Kennziffern bezeichnet. Neu hinzugekommen ist das 2/2-Magnetventil **31,** stromlos geöffnet, das in diesem Schaltungszustand die Hauptdruckleitung **23,** vor dem Rückschlagventil **24,** über die gezeigten Leitungsverbindungen **23.31** sowie **23.32** zur Rücklauf-Sammelleitung **23.33** zum Fluidreservoir **28** hin druckentlastet. Bei Druckfluidbedarf im Hydraulikspeicher **29** wird das 2/2-Magnetventil **31** bestromt (geschlossen), so dass in der Hauptdruckleitung **23** ein Druckaufbau möglich ist und die Rotationspumpe **22** über die Hauptdruckleitung **23,** das Rückschlagventil **24** sowie der danach weitergeführten Hauptdruckleitung **23.1** und die Abzweigleitung **23.11** in den Hydraulikspeicher **29** Druckfluid fördert, wenn sich der Schneckengetriebemotor **12.1** dreht. Der herrschende Speicherdruck wird über die Messleitung **23.13** zum Druckmessmittel **26.1** hydraulisch gemeldet und kontinuierlich erfasst. Die Aufrechterhaltung des für die nachfolgenden Betriebsfunktionen notwendigen Speicherdrucks erfolgt in bekannter Weise im Zusammenwirken vom Meßsignal von **26.1** mit der Einschaltzeit des 2/2-Magnetventils **31** während der Drehphasen des Schneckengetriebemotors **12.1** mittels elektrisch-elektronischer Schaltung (nicht dargestellt). Alle anderen Funktionen der Schaltung **20d** sind vergleichbar denen die sich aus dem Schaltungsaufbau **20b** ergeben, wie dort beschrieben.

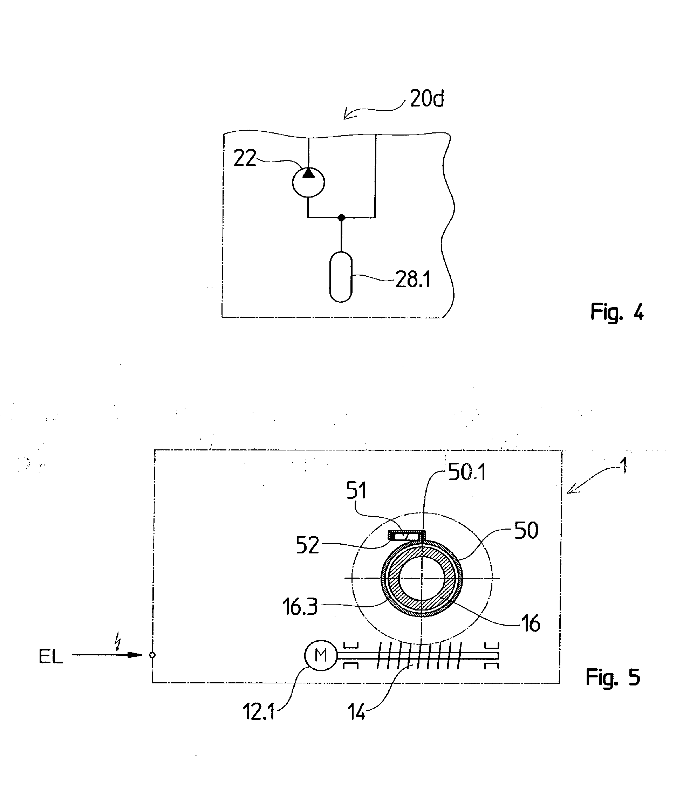

Der in **Fig. 4** gezeigte Schaltplanausschnitt **20d** bezieht sich lediglich auf eine alternative Gestaltung des Fluidreservoirs **28** in Abstimmung mit der konstruktiven Auslegung der Miniaturpumpen **22** bzw. **22.1.** Hierzu ist eine sogen. Vorspannung des Fluidreservoirs **28** vorgesehen, symbolisiert dargestellt durch das Speichersymbol **28.1.** Durch einen geringen Überdruck im Fluidreservoir **28.1** und der damit hydraulisch verbundenen Niederdruckseite, gegenüber der Atmosphäre wird das Saugverhalten der mit hohen Drehzahlen bzw. hoher Frequenz angetriebenen Kleinst-Hydraulikpumpen **22** bzw. **22.1** verbessert, was eine weitere Miniaturisierung der Druckerzeuger begünstigt.

Eine rein elektromechanische Lösung der Aufgabenstellung stellt das Teilgerät 1 in dem beispielhaften Erfindungsvorschlag nach **Fig. 5** dar. Die Teilspindel **16** ist von der geschlitzten Klemmhülse **50** wiederum mit geringem Spiel **16.3** umfasst. Die Klemmhülse **50** ist dabei gegenüber dem Gehäuse **11.1** des Grundgerätes **11** axial durch Form- und/oder Kraftschluss, spielfrei verbunden - ohne Einschränkung der radial minimalen Klemmbewegung, um die Ableitung hoher Bearbeitungskräfte über das Haltemoment der Teilspindel **16** und das Teilgerät **1** in das Bearbeitungszentrum zu gewährleisten. Ein elektromechanischer Linearaktor **51,** vorzugsweise ein Piezoaktor, ist an der Trennstelle **50.1** der geschlitzten Klemmhülse **50** so angeordnet, dass er bei Bestromung die Schlitzbreite **50.1** soweit verringert, dass das Spiel **16.3** zwischen Klemmhülse **50** und Teilspindel **16** zu Null wird und eine Klemmkraft auf die Teilspindel **16** aufbaut und dadurch die Teilspindel **16** fixiert. Ein Kraftsensor **52** im Kraftfluss der Klemmanordnung misst die aktuelle Klemmkraft.

Die Funktionen und unterschiedlichen Betriebsabläufe der verschiedenen, beispielhaften Ausführungsarten ergeben sich aus deren Beschreibungen, woraus hervorgeht, dass die Aufgabenstellung vollständig gelöst ist und zum vollständigen Betreiben der Dreh-Werkstückträger, einschließlich dem vom Programmablauf, unabhängig von der Drehbewegung, gesteuerten Fixieren der Drehposition, nur elektrische Energie dem Dreh-Werkstückträger zugeführt werden muss.

## Patentansprüche

1. Dreh-Werkstückträger mit fixierbarer Drehposition zur bearbeitungsgerechten Positionierung von Werkstücken auf Bearbeitungszentren mittels über ein elektromechanisches Getriebe positionsgenau angetriebener Teilspindel, im Werkstückträger-Gehäuse gelagert, **dadurch gekennzeichnet, dass** zum Betreiben aller Verstell- wie ansteuerbarer Klemmfunktionen innerhalb des Dreh-Werkstückträgers (1) nur elektrische Energie (EL) von außen zugeführt wird.

2. Dreh-Werkstückträger mit fixierbarer Drehposition nach Anspruch 1, **dadurch gekennzeichnet, dass** innerhalb des Dreh-Werkstückträgers **(1)** eine Einrichtung zur elektrohydraulischen Druckerzeugung **(20)** unmittelbarer Wirkverbindung zur hydraulischen Klemmeinrichtung **(17, 18)** integriert ist.

3. Dreh-Werkstückträger mit fixierbarer Drehposition nach Anspruch 1 oder 2, **dadurch gekennzeichnet, dass** die elektrohydraulische Druckerzeugung **(20a)** aus einer Rotationspumpe **(22),** angetrieben von einem E-Motor **(21),** die Klemmeinrichtung **(17, 18)** über ein, den Klemmdruck haltendes, dichtes Rückschlagventil **(24)** beaufschlagend, sowie einem, den Pumpendruck begrenzendes Druckbegrenzungsventil **(27,)** sowie einem vorzugsweise bestromt den Klemmdruck haltendes bzw. stromlos den Klemmdruck entlastendes 2/2-Magnetventil (25), sowie den Klemmdruck kontinuierlich messendes Druckmessmittel **(26)** besteht.

4. Dreh-Werkstückträger mit fixierbarer Drehposition nach Anspruch 1 oder 2, **dadurch gekennzeichnet, dass** die elektrohydraulische Druckerzeugung **(20b)** aus einer Rotationspumpe **(22),** angetrieben von einem E-Motor **(21),** über ein in Durchflussöffnung öffnendes, dichtes Rückschlagventil **(24)** in einen Hydraulikspeicher **(29)** fördert, sowie über ein erstes, stromlos geschlossenes, 2/2-Magnetventil **(25.1),** wobei bei bestromtem 2/2-Magnetventil **(25.1)** die Klemmeinrichtung **(18)** aus dem Hydraulikspeicher **(29)** mit Klemmdruck beaufschlagt wird, sowie über ein zweites 2/2-Magnetventil **(25) -** vorzugsweise bestromt den Klemmdruck haltend - stromlos den Klemmdruck entlastend, sowie über ein erstes, den Speicherdruck kontinuierlich messendes Druckmessmittel **(26.1),** sowie über ein zweites, den Klemmdruck kontinuierlich messendes Druckmessmittel **(26)** besteht.

5. Dreh-Werkstückträger mit fixierbarer Drehposition nach einem der vorhergehenden Ansprüche, **dadurch gekennzeichnet, dass** die Einrichtung zur elektrohydraulischen Druckerzeugung **(20c)** mit einer Elektro-Magnetpumpe **(22.1),** angetrieben über eine Frequenz- und Stromansteuerung, ausgeführt ist.

6. Dreh-Werkstückträger mit fixierbarer Drehposition nach einem den Ansprüche 1 oder 2, **dadurch gekennzeichnet, dass** die Einrichtung zur elektrohydraulische Druckerzeugung **(20d)** aus einer vom E-motor **(12.1)** der Getriebeschnecke **(14)** mit-angetriebenen Rotationspumpe **(22)** gespeist wird.

7. Dreh-Werkstückträger mit fixierbarer Drehposition nach Anspruch 6, **dadurch gekennzeichnet, dass** die elektrohydraulische Klemmdruckerzeugung **(20d)** folgende hydraulische Bauteile bzw. Funktionen umfasst:
a) in einer ersten Abzweigung vom Fluid-Druckkanal **(23)** ein Druckbegrenzungsventil **(27)** zur max. Druckabsicherung mit Abfluss zum Fluidreservoir **(28),**
b) in einer zweiten Abzweigung **(23.31)** vom Fluid-Druckkanal **(23)** ein erstes 2/2-Magnetventil **(31)** -stromlos geöffnet, bestromt geschlossen-, mit Abfluss zum Fluidreservoir **(28),**
c) im weiteren Verlauf des Fluid-Druckkanals **(23)** ein in Strömungsrichtung öffnendes Rückschlagventil **(24),**
d) in einer dritten Abzweigung **(23.11)** vom Fluid-Druckkanal **(23.1)** nach der Sperrseite des Rückschlagventils **(24)** ein Hydraulikspeicher **(29),** zur zeitweisen Aufnahme eines Fluidvolumens unter Druck des von der Rotationspumpe **(22)** geförderten Fluids,
e) sowie eine hydraulische, parallele Verbindung **(23.13)** zu einem ersten Druckmessmittel **(26.1),**
f) im weiteren Verlauf ist der Fluid-Druckkanal **(23.1)** sperrbar durch ein zweites 2/2-Magnetventil **(25.1)** -stromlos geschlossen, bestromt offen-
g) ausgangsseitig des zweiten 2/2-Magnetventils **(25.1)** zweigt vom Fluid-Druckkanal **(23.21)** eine erste Hydraulikleitung **(23.23)** zum Druck-Fluideintritt **(19.1)** des mit dem Klemmdruck zu beaufschlagenden Druckraums **(18)** der Klemmhülse **(17)** ab,
h) weiter zweigt vom Fluid-Druckkanal **(23.21)** eine zweite Hydraulikleitung **(23.22)** zu einem dritten - vorzugsweise stromlos geöffnetes, bestromt den Klemmdruck haltendes - 2/2-Magnetventil **(25)** ab, dessen Fluid-Abströmseite über die Sammelleitung **(23.33)** mit dem Fluidreservoir verbunden ist,
i) über eine Messleitung **(23.24)** ist ein zweites Druckmessmittel **(26)** mit dem Druckraum **(18)** der Klemmeinrichtung hydraulisch wirksam verbunden.

8. Dreh-Werkstückträger mit fixierbarer Drehposition nach einem der vorhergehenden Ansprüche, **dadurch gekennzeichnet, dass** das Fluidreservoir **(28.1)** auf einen geringen, jedoch über dem Umgebungsdruck liegenden, Niederdruck vorgespannt ist.

9. Dreh-Werkstückträger mit fixierbarer Drehposition nach Anspruch 1, **dadurch gekennzeichnet, dass** der Durchmesser der am Umfang geschlitzten Klemmhülse **(50)** über einen elektromechanischen Aktor **(51),** bis zur Erzeugung einer Klemmkraft auf die Teilspindel **(16),** verkleinert wird.

10. Dreh-Werkstückträger mit fixierbarer Drehposition nach Anspruch 9, **dadurch gekennzeichnet, dass** die wirkende Klemmkraft des elektromechanischen Aktors **(51)** über die Erfassung seiner Reaktionskraft mittels Kraftsensor **(52)** kontinuierlich gemessen wird.
